# EUROPEAN PATENT APPLICATION

(11) **EP 4 797 444 A1**
(43) Date of publication of application: **26.08.2026**
(21) Application number: 24878670.9
(22) Date of filing: 19.08.2024
(51) Int. Cl.: H01Q 1/36

(54) **ANTENNA APPARATUS, TELEVISION SET, AND TERMINAL DEVICE**

(30) Priority: 18.10.2023 CN 202311348627
(71) Applicant: Shenzhen TCL Digital Technology Ltd., Shenzhen, Guangdong 518054 (CN)
(72) Inventor: Yin, Liuzhong, Shenzhen, Guangdong 518054 (CN)
(74) Representative: Herrero & Asociados, S.L.
(86) International application number: PCT/CN2024/113202
(87) International publication number: WO 2025/082019

(57) **Abstract**

The present application discloses an antenna apparatus, a television set, and a terminal device. The antenna apparatus comprises a circuit board and a radiation unit; the circuit board comprises a first surface and a second surface that are opposite to each other; the radiation unit comprises a metal column; the metal column is located on the first surface, and one end of the metal column is fixed on the first surface.

## Description

This application claims priority to Chinese Application No. 202311348627.1, entitled "ANTENNA APPARATUS, TELEVISION SET, AND TERMINAL DEVICE", filed to the China National Intellectual Property Administration on October 18, 2023. The entire disclosures of the above application are incorporated herein by reference.

### TECHNICAL FIELD

The present disclosure relates to a field of antenna technologies, and more particularly, to an antenna apparatus, a television set, and a terminal device.

### BACKGROUND

Microstrip antennas are currently the mainstream form of millimeter-wave antennas. This antenna structure is simple to fabricate, forming a patch portion by depositing copper on a substrate, which is then integrated with a circuit board to create a patch antenna structure.

### TECHNICAL PROBLEM

However, the patch portion of the patch antenna structure occupies a significant area on the circuit board, which hinders the integration of multiple components.

### SUMMARY

The present disclosure provides an antenna apparatus, a television set, and a terminal device, which could reduce the occupied area of the circuit board to facilitate integration of more components.

The present disclosure provides an antenna apparatus. The antenna apparatus includes a circuit board and a radiation unit. The circuit board includes a first surface and a second surface which are opposite. The radiation unit includes a metal column disposed on the first surface with one end of the metal column fixed to the first surface.

In some embodiments, the metal column is perpendicular to the circuit board.

In some embodiments, the radiation unit further includes a reflector, and the reflector includes multiple metal grid strips arranged in a column on the first surface, with one end of the metal grid strips fixed to the first surface. The metal column is positioned near a side edge of the circuit board, and located between the side edge of the circuit board and the metal grid strips.

In some embodiments, the radiation unit further includes a reflector, and the reflector includes multiple metal grid strips positioned perpendicular to the circuit board in V-shaped or U-shaped formations on the first surface, with an opening of the V-shaped or U-shaped facing the metal column. The metal column is positioned near a side edge of the circuit board, and located between the side edge of the circuit board and the metal grid strips.

In some embodiments, the radiation unit further includes a reflector, and the reflector includes a metal sheet positioned perpendicular to the circuit board on the first surface. The metal column is positioned near a side edge of the circuit board, and located between the side edge of the circuit board and the metal sheets.

In some embodiments, the antenna apparatus further includes a grounding sheet, and the grounding sheet is positioned near the first side and perpendicular to the circuit board on the second surface.

In some embodiments, a length of the metal grid strip is greater than a length of the metal column.

The present disclosure provides an antenna apparatus. The antenna apparatus includes a circuit board, a first radiation unit and a second radiation unit. The circuit board includes a first surface and a second surface which are opposite. The first radiation unit includes a first metal column located on the first surface, with one end of the first metal column fixed to the first surface. The second radiation unit includes a second metal column located on the first surface, with one end of the second metal column fixed to the first surface. The first metal column and the second metal column are arranged at intervals, and located on a same side of the circuit board, and the first metal column and the second metal column are at a same distance from the same side of the circuit board.

In some embodiments, the first metal column is perpendicular to the circuit board.

In some embodiments, the second metal column is perpendicular to the circuit board.

In some embodiments, the first radiation unit further includes a first reflector with multiple metal grid strips, the multiple metal grid strips are arranged in a column on the first surface, with one end of the metal grid strips fixed to the first surface. The first metal column is positioned near a side edge of the circuit board, and located between the side edge of the circuit board and the metal grid strips.

In some embodiments, the first radiation unit further includes a first reflector with multiple metal grid strips, the multiple metal grid strips are positioned perpendicular to the circuit board in V-shaped or U-shaped formations on the first surface, with an opening of the V-shaped or U-shaped facing the metal column. The first metal column is positioned near a side edge of the circuit board, and located between the side edge of the circuit board and the metal grid strips.

In some embodiments, the second radiation unit further includes a second reflector with multiple metal grid strips, the multiple metal grid strips are arranged in a column on the first surface, with one end of the metal grid strips fixed to the second surface. The second metal column is positioned near a side edge of the circuit board, and located between the side edge of the circuit board and the metal grid strips.

In some embodiments, the second radiation unit further includes a second reflector with multiple metal grid strips, the multiple metal grid strips are positioned perpendicular to the circuit board in V-shaped or U-shaped formations on the first surface, with an opening of the V-shaped or U-shaped facing the metal column. The second metal column is positioned near a side edge of the circuit board, and located between the side edge of the circuit board and the metal grid strips.

The present disclosure also provides a television set. The television set includes a front frame and an antenna apparatus. The antenna apparatus includes: a circuit board including a first surface and a second surface which are opposite; a radiation unit including a metal column disposed on the first surface with one end of the metal column fixed to the first surface; and a grounding sheet, which is perpendicular to the circuit board on the second surface, and the grounding sheet is inserted into a lower border of the front frame.

In some embodiments, the metal column is perpendicular to the circuit board.

The present disclosure also provides a television set. The television set includes a front frame and an antenna apparatus. The antenna apparatus includes a circuit board, a first radiation unit, a second radiation unit and a grounding sheet. The circuit board includes a first surface and a second surface which are opposite. The first radiation unit includes a first metal column located on the first surface, with one end of the first metal column fixed to the first surface. The second radiation unit includes a second metal column located on the first surface, with one end of the second metal column fixed to the first surface. The first metal column and the second metal column are arranged at intervals, and located on a same side of the circuit board, and the first metal column and the second metal column are at a same distance from the same side of the circuit board. The grounding sheet is perpendicular to the circuit board on the second surface, and the grounding sheet is inserted into a lower border of the front frame.

The present disclosure also provides a terminal device. The terminal device includes the antenna apparatus abovementioned. The antenna apparatus includes: a circuit board including a first surface and a second surface which are opposite; and a radiation unit including a metal column disposed on the first surface with one end of the metal column fixed to the first surface.

In some embodiments, the metal column is perpendicular to the circuit board.

In some embodiments, the radiation unit further including a reflector, and the reflector includes multiple metal grid strips arranged in a column on the first surface, with one end of the metal grid strips fixed to the first surface. The metal column is positioned near a side edge of the circuit board, and located between the side edge of the circuit board and the metal grid strips.

### BENEFICIAL EFFECTS

The present disclosure provides an antenna apparatus, television set, and mobile terminal. In this embodiment, compare with that patch antenna formed by arrange the patch structure on the circuit board, a section of metal column is arranged on the circuit board as an antenna radiator, which could reduce the occupied area of the circuit board, and further facilitate the integration of other components in the circuit board.

### BRIEF DESCRIPTION OF DRAWINGS

The technical solutions and other beneficial effects of the present disclosure will become apparent through detailed description of specific implementations with reference to the accompanying drawings.
FIG. 1 is a schematic diagram of a first structure of an antenna apparatus according to an embodiment of the present disclosure.
FIG. 2 is a schematic diagram of a second structure of an antenna apparatus according to an embodiment of the present disclosure.
FIG. 3 is a schematic diagram of an U-shaped reflector in an antenna apparatus according to an embodiment of the present disclosure.
FIG. 4 is a schematic diagram of a reflector sheet in an antenna apparatus according to an embodiment of the present disclosure.
FIG. 5 is a schematic diagram of a structure with two radiating elements in an antenna apparatus according to an embodiment of the present disclosure.
FIG. 6 is a radiation pattern of the antenna apparatus in FIG. 5 according to an embodiment of the present disclosure.
FIG. 7 and FIG. 8 are schematic diagrams of a structure with two radiating elements in an antenna apparatus according to an embodiment of the present disclosure.
FIG. 9 is a schematic diagram of an antenna apparatus assembled in a television set according to an embodiment of the present disclosure.
FIG. 10 is a horizontal plane radiation pattern of an antenna apparatus applied in a television set according to an embodiment of the present disclosure.

### Reference signs:

10-antenna structure;
11-patch portion; 12-base;
100-circuit board; 200-radiation unit; 300-grounding sheet; 210-metal column; 221-metal grid strip; 222-metal sheet;
201-first radiation unit; 202-second radiation unit; 211-first metal column; 212-second metal column;
2221-first metal sheet; 2222-second metal sheet; 1-front frame; 2-antenna apparatus.

### DETAILED DESCRIPTION

The technical solutions in the embodiments of the present disclosure will be clearly and completely described below with reference to the accompanying drawings in the embodiments of the present disclosure. Apparently, the described embodiments are merely a part of the embodiments of the present disclosure, rather than all of them. All other embodiments obtained by those skilled in the art based on the embodiments of the present disclosure without creative efforts shall fall within the protection scope of the present disclosure.

To increase the light-emitting angle of LED beads or light sources and reduce visual uniformity issues such as lamp shadows, dark corners, and dark frames in display images, the embodiments of the present disclosure provide an optical component, LED bead assembly, backlight module, and display device, which will be explained below with reference to the accompanying drawings.

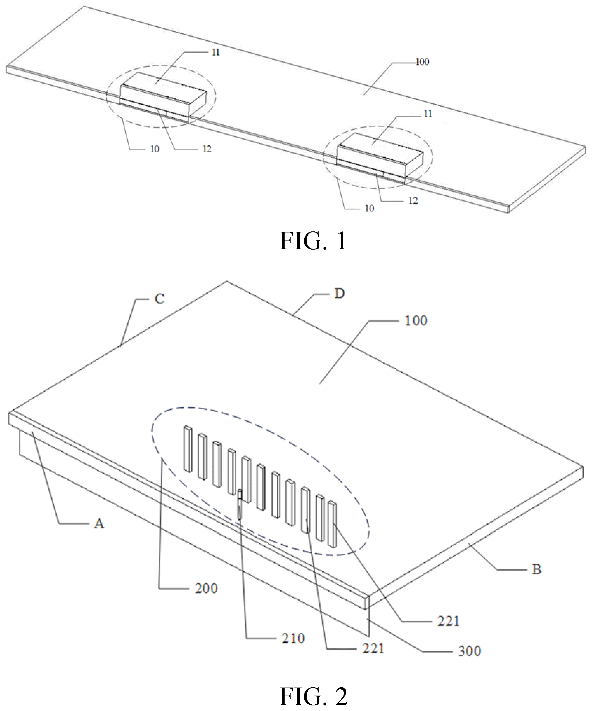

Please refer to FIG. 1, this embodiment provides an antenna apparatus. The antenna apparatus includes a circuit board 100. One or more antenna structure s 10 are disposed on the circuit board 100. Each antenna structure 10 includes a patch portion 11 and a base 12. The base 12 of the antenna structure 10 is embedded in the circuit board 1 and integrally formed with the circuit board 100, while the patch portion 11 is disposed on the corresponding base 12.

Please refer to FIG. 2, this embodiment provides an antenna apparatus. The antenna apparatus includes a circuit board 100 and a radiation unit 200. The circuit board 100 includes a first surface and a second surface which are opposite. The radiation unit 200 includes a metal column 210 disposed on the first surface, with one end of the metal column 210 fixed to the first surface. Specifically, the metal column 210 is connected to the circuit board 100 at one end, while the other end remains free. In this embodiment, the metal column 210 functions as an antenna radiator fed through its base end, where a connection end with the circuit board 100 serves as the feed point for radiating radio frequency signals, while the circuit board 100 acts as an antenna ground. In this embodiment, compare with that patch antenna formed by arrange the patch structure on the circuit board 100, a section of metal column 210 is arranged on the circuit board 100 as an antenna radiator, which could reduce the occupied area of the circuit board 100, and further facilitate the integration of other components in the circuit board 100.

In at least one embodiment, the metal column 210 is perpendicular to the circuit board 100.

In some embodiments, the radiation unit 200 in this present disclosure further includes a reflector. The reflector includes multiple metal grid strips 221. These metal grid strips 221 are arranged in a column on the first surface, with one end of the metal grid strips 221 fixed to the first surface. The metal column 210 is positioned near a side edge of the circuit board 100, and located between the side edge of the circuit board 100 and the metal grid strips 221. When the circuit board 100 in this embodiment has four sides labeled as first side A, second side B, third side C, and fourth side D, the metal column 210 is near to the first side A of the circuit board 100. The reflector is also positioned near the first side A, with the metal column 210 is located between the first side A and the reflector. A spacing between the reflector and the metal column 210 is adjusted based on actual antenna performance requirements, which is not specifically limited in this present disclosure. The reflector redirects radio frequency signals emitted by the metal column 210 toward the first side A, achieving directional radiation for the antenna apparatus.

The metal grid strips 221 in this embodiment share a same material as the metal column 210, both using high-conductivity metals like stainless steel or copper. While each metal grid strip 221 may have uniform length, they are slightly longer than the metal column 210.

In at least one embodiment, the metal grid strips 221 are arranged perpendicular to the circuit board 100 in a column on the first surface.

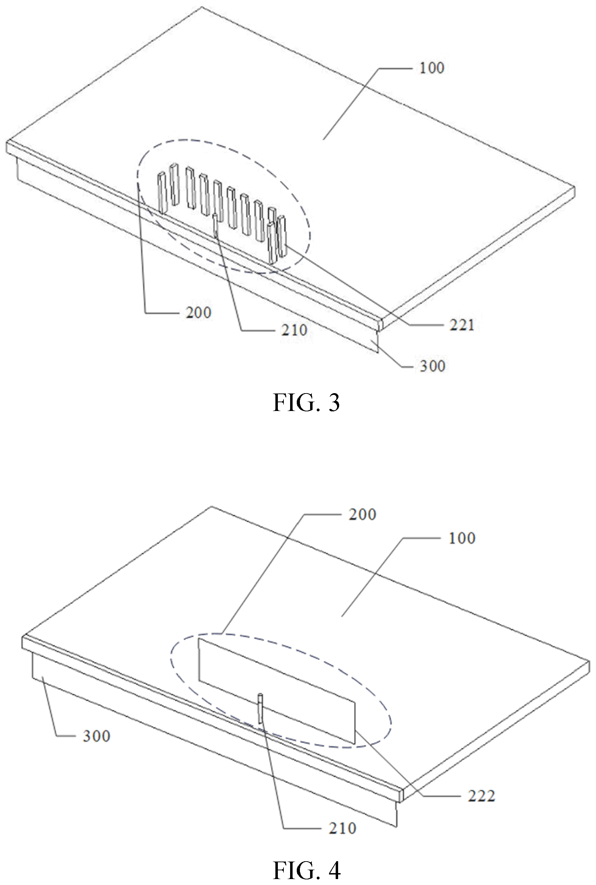

Referring to FIG. 3, in some embodiments, the metal grid strips 221 in this present disclosure may be arranged in columns, U-shaped, or V-shaped configurations. Specifically, the multiple metal grid strips 221 are positioned perpendicular to the circuit board 100 in V-shaped or U-shaped formations on the first surface, with an opening of the V-shaped or U-shaped facing the metal column 210. As shown in FIG. 3, the U-shaped reflector's opening faces the metal column 210. This reflector configuration helps redirect radio frequency signals from the metal column 210, enabling directional radiation while allowing beam shaping through reflector geometry adjustments.

Referring to FIG. 4, in some embodiments, the reflector may include a metal sheet, and the metal sheet is positioned perpendicular to the circuit board 100 on the first surface. That is, the reflector in this present disclosure could also be directly replaced by the metal sheet. Here, the metal column 210 is positioned near a side edge of the circuit board 100, and located between the side edge of the circuit board 100 and these metal sheets. Similarly, the metal sheets redirect radio frequency signals from the metal column 210 toward the first side, for achieving directional radiation for the antenna apparatus.

In some embodiments, the antenna apparatus further includes a grounding sheet 300. The grounding sheet 300 is positioned near the first side and perpendicular to the circuit board 100 on the second surface. This grounding sheet 300 facilitates plug-and-play assembly of the antenna apparatus.

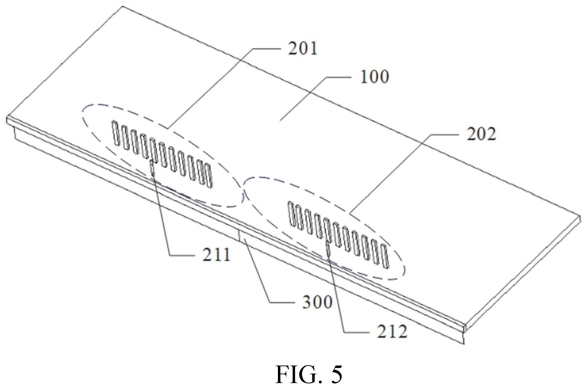

Referring to FIG. 5, in some embodiments, the radiation unit 200 may be implemented singularly or in multiple configurations. When multiple radiation units 200 are arranged, they are spaced apart along one side of the circuit board 100. Specifically, the antenna apparatus may include a first radiation unit 201 with a first metal column 211 and a second radiation unit 202 with a second metal column 212. The first metal column 211 is located on the first surface and one end of the first metal column 211 is fixed to the first surface, and the second metal column 212 is located on the first surface and one end of the second metal column 212 is fixed to the first surface. The first metal column 211 and the second metal column 212 are arranged at intervals, and located on a same side of the circuit board 100. The first metal column 211 and the second metal column 212 are at a same distance from the same side of the circuit board 100.

In this embodiment, compare with that patch antenna formed by arrange the patch structure on the circuit board 100, a section of the metal column is arranged on the circuit board 100 as an antenna radiator, which could reduce the occupied area of the circuit board 100, and further facilitate the integration of other components in the circuit board 100.

In some embodiments, as with a single radiation unit, when multiple radiation units are arranged, a reflector is also provided in each corresponding radiating unit. Specifically, the first radiation unit 201 includes a first reflector with multiple metal grid strips, the metal grid strips are arranged perpendicular to the circuit board in a column on the first surface. The second radiation unit 202 includes a second reflector with multiple metal grid strips, these metal grid strips are arranged in a column on the first surface, with one end of the metal grid strips fixed to the first surface. The first metal column 211 is positioned near a side edge of the circuit board, and located between the side edge of the circuit board and the metal grid strips. The second metal column 212 is positioned near a side edge of the circuit board, and located between the side edge of the circuit board and the metal grid strips. These reflectors enable directional radiation for the antenna apparatus by redirecting radio frequency signals from the metal columns.

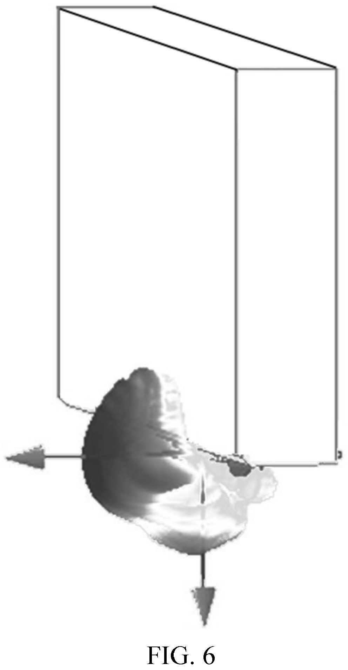

When multiple radiating units are arranged, considering a presence of other horizontally polarized radiating units in their surroundings, using metal grid strips as reflectors could avoid interference with the normal operation of surrounding radiating units. When two radiating units are arranged, the first radiating unit 201 could be used for receiving radio frequency signals, while the second radiating unit 202 could be used for transmitting radio frequency signals. If this antenna apparatus for receiving and transmitting is used to radiate radio frequency signals with a frequency of 24 GHz to 25 GHz, a radiation pattern of each corresponding radiating unit is shown in FIG. 6, where the radiation signals are directed towards the side of the circuit board.

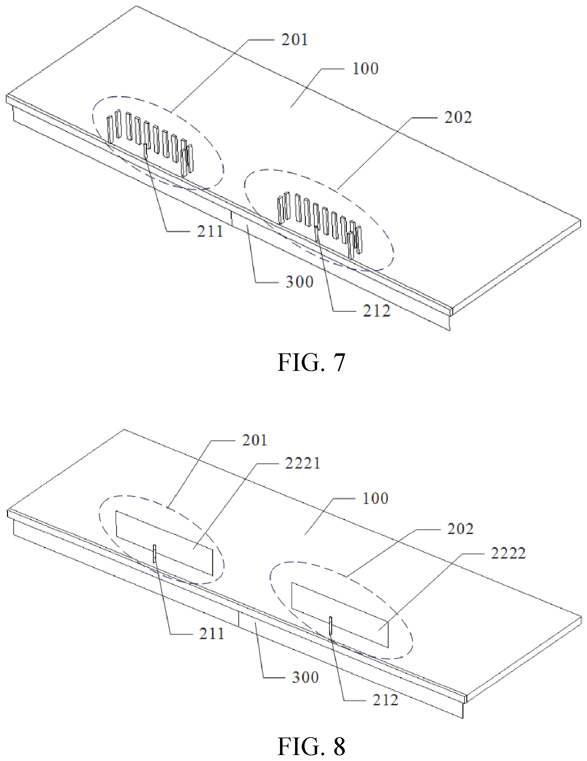

Referring to FIG. 7, similarly, in some embodiments, when multiple radiating units are arranged, the reflector in each radiating unit could be U-shaped or V-shaped. Specifically, the first reflector includes multiple metal grid strips, the multiple metal grid strips are positioned perpendicular to the circuit board in V-shaped or U-shaped formations on the first surface, with an opening of the V-shaped or U-shaped facing the metal column. The second reflector includes multiple metal grid strips, the multiple metal grid strips are positioned perpendicular to the circuit board in V-shaped or U-shaped formations on the first surface, with an opening of the V-shaped or U-shaped facing the metal column. The first metal column 211 is positioned near a side edge of the circuit board, and located between the side edge of the circuit board and the metal grid strips. The second metal column 212 is positioned near a side edge of the circuit board, and located between the side edge of the circuit board and the metal grid strips. These reflectors enable directional radiation for the antenna apparatus by redirecting radio frequency signals from the metal columns.

Referring to FIG. 8, in some embodiments, the reflectors could alternatively be implemented using metal sheets. Specifically, the first reflector includes a first metal sheet 2221, and the second reflector includes a second metal sheet 2222. Similarly, the first metal column 211 is positioned near a side edge of the circuit board, and located between the side edge of the circuit board and the first metal sheet 2221, while the second metal column 212 is positioned near a side edge of the circuit board, and located between the side edge of the circuit board and the second metal sheet 2222.

This present disclosure also provides a television set. The television set includes a front frame and the aforementioned antenna apparatus. The antenna apparatus includes a circuit board, a radiating unit, and a grounding sheet. The radiation unit includes a metal column disposed on the first surface, with one end of the metal column fixed to the first surface. The grounding sheet is perpendicular to the circuit board on the second surface, and the grounding sheet is inserted into a lower border of the front frame. As the antenna apparatus has been detailed previously, no further description is provided here.

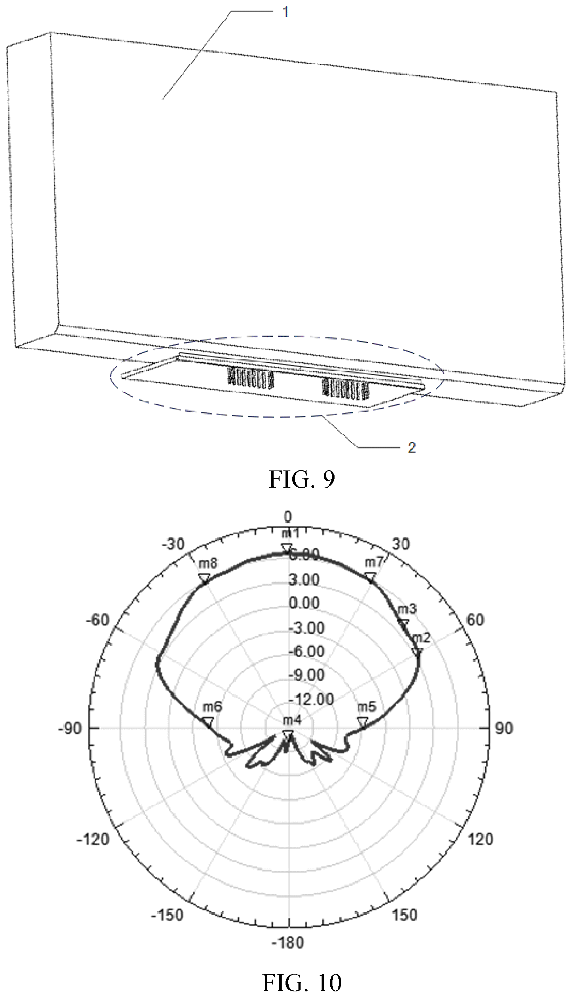

Referring to FIG. 9, this present disclosure also provides a television set. The television set includes a front frame 1 and an antenna apparatus 2. The antenna apparatus 2 includes a circuit board, a first radiating unit, a second radiating unit, and a grounding sheet. The first radiation unit includes a first metal column, and the first metal column is located on the first surface and one end of the first metal column is fixed to the first surface. The second radiation unit includes a second metal column., and the second metal column is located on the first surface and one end of the second metal column is fixed to the first surface. The first metal column and the second metal column are arranged at intervals, and located on a same side of the circuit board. The first metal column and the second metal column are at a same distance from the same side of the circuit board. The grounding sheet is perpendicular to the circuit board on the second surface, and the grounding sheet is inserted into a lower border of the front frame 1.

Referring to FIG. 10, FIG. 10 shows a horizontal radiation pattern of the antenna apparatus 2 integrated in the television set. A 360° gain pattern in dB units demonstrates approximately 6dB gain within ±30°, decreasing beyond ±60°. It could be seen that the antenna apparatus 2 could project most of the energy into a sector area of ±60°. As the antenna apparatus 2 has been thoroughly described, no further details are provided.

This present disclosure further provides a movable terminal. The movable terminal includes the aforementioned antenna apparatus. As the antenna apparatus has been thoroughly described, no further details are provided.

In the above embodiments, various implementations are described with emphasis on different aspects. For portions not detailed in one embodiment, reference can be made to related descriptions in other embodiments.

The antenna apparatus embodiments have been described in detail. Specific examples were used to illustrate the principles and implementations, which help understand the core technical solutions. Those skilled in the art should recognize that modifications or equivalent replacements of technical features can be made without departing from the scope of this application.

## Claims

1. An antenna apparatus, comprising:
a circuit board comprising a first surface and a second surface which are opposite;
a radiation unit comprising a metal column disposed on the first surface with one end of the metal column fixed to the first surface.

2. The antenna apparatus according to claim 1, wherein the metal column is perpendicular to the circuit board.

3. The antenna apparatus according to claim 1, wherein the radiation unit further comprising a reflector, and the reflector comprises multiple metal grid strips arranged in a column on the first surface, with one end of the metal grid strips fixed to the first surface;
wherein the metal column is positioned near a side edge of the circuit board, and located between the side edge of the circuit board and the metal grid strips.

4. The antenna apparatus according to claim 1, wherein the radiation unit further comprising a reflector, and the reflector comprises multiple metal grid strips positioned perpendicular to the circuit board in V-shaped or U-shaped formations on the first surface, with an opening of the V-shaped or U-shaped facing the metal column;
wherein the metal column is positioned near a side edge of the circuit board, and located between the side edge of the circuit board and the metal grid strips.

5. The antenna apparatus according to claim 1, wherein the radiation unit further comprising a reflector, and the reflector comprises a metal sheet positioned perpendicular to the circuit board on the first surface;
wherein the metal column is positioned near a side edge of the circuit board, and located between the side edge of the circuit board and the metal sheets.

6. The antenna apparatus according to any one of claims 1-5, wherein further comprising a grounding sheet, and the grounding sheet is positioned near the first side and perpendicular to the circuit board on the second surface.

7. The antenna apparatus according to any one of claims 1-5, wherein a length of the metal grid strip is greater than a length of the metal column.

8. An antenna apparatus, comprising:
a circuit board comprising a first surface and a second surface which are opposite;
a first radiation unit comprising a first metal column located on the first surface, with one end of the first metal column fixed to the first surface;
a second radiation unit comprising a second metal column located on the first surface, with one end of the second metal column fixed to the first surface;
wherein the first metal column and the second metal column are arranged at intervals, and located on a same side of the circuit board, and the first metal column and the second metal column are at a same distance from the same side of the circuit board.

9. The antenna apparatus according to claim 8, wherein the first metal column is perpendicular to the circuit board.

10. The antenna apparatus according to claim 8, wherein the second metal column is perpendicular to the circuit board.

11. The antenna apparatus according to claim 8, wherein the first radiation unit further comprises a first reflector with multiple metal grid strips, the multiple metal grid strips are arranged in a column on the first surface, with one end of the metal grid strips fixed to the first surface;
wherein the first metal column is positioned near a side edge of the circuit board, and located between the side edge of the circuit board and the metal grid strips.

12. The antenna apparatus according to claim 8, wherein the first radiation unit further comprises a first reflector with multiple metal grid strips, the multiple metal grid strips are positioned perpendicular to the circuit board in V-shaped or U-shaped formations on the first surface, with an opening of the V-shaped or U-shaped facing the metal column;
wherein the first metal column is positioned near a side edge of the circuit board, and located between the side edge of the circuit board and the metal grid strips.

13. The antenna apparatus according to claim 8, wherein the second radiation unit further comprises a second reflector with multiple metal grid strips, the multiple metal grid strips are arranged in a column on the first surface, with one end of the metal grid strips fixed to the second surface;
wherein the second metal column is positioned near a side edge of the circuit board, and located between the side edge of the circuit board and the metal grid strips.

14. The antenna apparatus according to claim 8, wherein the second radiation unit further comprises a second reflector with multiple metal grid strips, the multiple metal grid strips are positioned perpendicular to the circuit board in V-shaped or U-shaped formations on the first surface, with an opening of the V-shaped or U-shaped facing the metal column;
wherein the second metal column is positioned near a side edge of the circuit board, and located between the side edge of the circuit board and the metal grid strips.

15. A television set, comprising a front frame and an antenna apparatus, the antenna apparatus comprising:
a circuit board comprising a first surface and a second surface which are opposite;
a radiation unit comprising a metal column disposed on the first surface with one end of the metal column fixed to the first surface;
a grounding sheet, which is perpendicular to the circuit board on the second surface, and the grounding sheet is inserted into a lower border of the front frame.

16. The television set according to claim 15, wherein the metal column is perpendicular to the circuit board.

17. A television set, comprising a front frame and an antenna apparatus, the antenna apparatus comprising:
a circuit board comprising a first surface and a second surface which are opposite;
a first radiation unit comprising a first metal column located on the first surface, with one end of the first metal column fixed to the first surface;
a second radiation unit comprising a second metal column located on the first surface, with one end of the second metal column fixed to the first surface; wherein the first metal column and the second metal column are arranged at intervals, and located on a same side of the circuit board, and the first metal column and the second metal column are at a same distance from the same side of the circuit board;
a grounding sheet, which is perpendicular to the circuit board on the second surface, and the grounding sheet is inserted into a lower border of the front frame.

18. A terminal device, comprising an antenna apparatus, the antenna apparatus comprising:
a circuit board comprising a first surface and a second surface which are opposite;
a radiation unit comprising a metal column disposed on the first surface with one end of the metal column fixed to the first surface.

19. The terminal device according to claim 18, wherein the metal column is perpendicular to the circuit board.

20. The terminal device according to claim 18, wherein the radiation unit further comprising a reflector, and the reflector comprises multiple metal grid strips arranged in a column on the first surface, with one end of the metal grid strips fixed to the first surface;
wherein the metal column is positioned near a side edge of the circuit board, and located between the side edge of the circuit board and the metal grid strips.
